# EUROPÄISCHE PATENTANMELDUNG

(11) **EP 2 251 115 A1**
(43) Veröffentlichungstag der Anmeldung: **17.11.2010**
(21) Anmeldenummer: 10008153.8
(22) Anmeldetag: 16.01.2008
(51) Int. Cl.: B21D 53/04, B23P 15/26, F28D 1/03, F28D 9/00, F28F 3/02, B21C 37/15, F28F 1/02

(54) **Herstellungsverfahren für Flachrohre, Walzenstraße und Wärmetauscher mit solchen Flachrohren**

(30) Priorität: 01.02.2007 DE 102007004993
(62) Teilanmeldung aus: 08701132.6
(71) Anmelder: Modine Manufacturing Company, Racine, Wisconsin 53403-2552 (US)
(72) Erfinder: Opferkuch, Frank, Dr.-Ing., 72669 Unterensingen (DE); Borst, Daniel, Dipl.-Ing., 72649 Wolfschlugen (DE); Ploppa, Martin, Dipl.-Ing., 72793 Pfullingen (DE); Zobel, Werner, Dipl.-Ing.(FH), 71032 Böblingen (DE); Nies, Jens, Dipl.-Ing., 71088 Holzgerlingen (DE); Stolz, Andreas, Dipl.-Ing., 72141 Walddorfhäslach (DE); Eisele, Siegfried, Dipl.-Ing., 71101 Schönaich (DE); Merz, Dieter, Dipl.-Ing., 72359 Dotternhausen (DE)
(74) Vertreter: Wolter, Klaus-Dietrich

(57) **Zusammenfassung**

Die Erfindung betrifft ein Herstellungsverfahren für Flachrohre, aus wenigstens einem Streifen endlosen Bandmaterials (Bb) mit wenigstens einem Wandteil (a) und einem mit Wellen ausgebildeten Innenteil (c), auf einer mit Walzenpaaren ausgerüsteten Walzenstraße, wobei der Streifen in Längsrichtung (LR) durch die Walzen läuft und umgeformt wird, wobei das mit Wellen ausgebildete Innenteil (c) zwischen das umgeformte Wandteil (a, b) gebracht wird, wonach das Schließen des Flachrohrs durchgeführt wird. Die Herstellung der Flachrohre wird erfindungsgemäß dadurch vereinfacht, dass in Längsrichtung (LR) des Streifens (c) laufende beabstandete Wellenberge (Wb) und Wellentäler (Wt) und zwischen denselben sich erstreckende Turbulatoren (T) ausgebildet werden.

## Beschreibung

Herstellungsverfahren für Flachrohre, Walzenstraße und Wärmetauscher mit solchen Flachrohren

Die Erfindung betrifft ein Herstellungsverfahren für Flachrohre, aus wenigstens einem Streifen endlosen Bandmaterials mit wenigstens einem Wandteil und einem mit Wellen ausgebildeten Innenteil, auf einer mit Walzenpaaren ausgerüsteten Walzenstraße, wobei der Streifen in Längsrichtung durch die Walzen läuft und umgeformt wird, wobei das mit Wellen ausgebildete Innenteil zwischen das umgeformte Wandteil gebracht wird, wonach das Schließen des Flachrohrs erfolgt. Ferner betrifft die Erfindung eine Walzenstraße, auf der das Verfahren ausgeführt wird und einen Wärmetauscher, der die hergestellten Flachrohre aufweist.

Die vorstehend aufgeführten Verfahrensschritte gehen aus der älteren Patentanmeldung mit dem Aktenzeichen DE 10 2006 029 378.9 hervor.

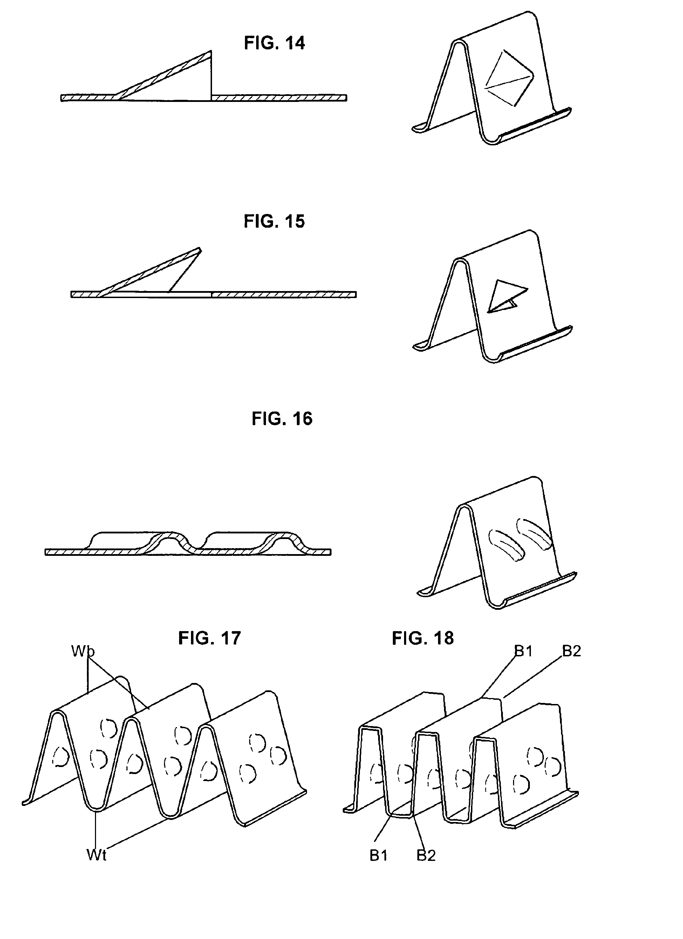

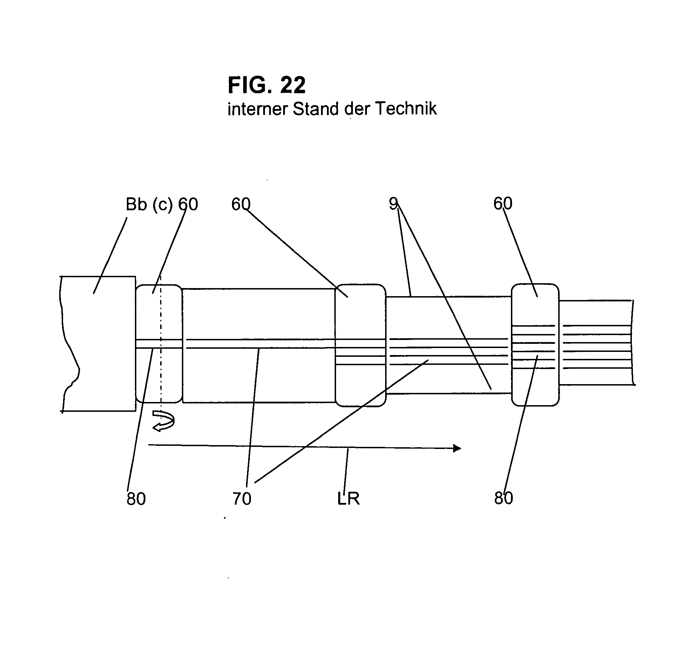

Zur Herstellung der Flachrohre ist eine Walzenstraße erforderlich, die sich, beispielsweise in Abhängigkeit von der gewünschten Geometrie des Innenteiles bzw. des "endlosen" Streifens, aus dem das Innenteil erzeugt wird, über mehr als 10- 20 m erstrecken könnte, was erhebliche Investitionsmittel erfordert. In der dortigen Fig. 16, die als Fig. 22 in dieser Anmeldung vorhanden ist, wird der Sachverhalt angedeutet. Wie die genannte Abbildung zeigt, wird im Zuge der Herstellung der Wellungen 70 des Innenteiles, die Breite des Streifens entsprechend reduziert und die Anzahl der Wellungen 70 erhöht, wodurch u. a. der Installationsaufwand der Walzenstraße beeinflusst wird, weil zahlreiche Walzenpaare 60 erforderlich sind.

Die Fig. 5 in der DE 198 00 096A1 zeigt ebenfalls eine Vielzahl von Walzenpaaren. Ansonsten wird dort die Herstellung gewellter Platten beschrieben.

Aus der Fig. 4 der US 6 286 201 B1 geht ein Herstellungsverfahren für Flachrohre gemäß dem Oberbegriff des Anspruchs 1 hervor. Im Zuge des Schließens des Flachrohres wird dort ein mit Querwellen vorgeformter, aufgewickelter Innenteil des Flachrohrs in dasselbe eingefädelt. Gemäß den Fig. 16 und 17 besitzt das gewellte Innenteil Schnitte zur Beeinflussung der Strömung. Deren Herstellung ist nicht beschrieben worden. Dieses Flachrohr besitzt nicht die erforderliche Stabilität, insbesondere wenn man bedenkt, dass die Blechdicken ständig reduziert werden.

Die Aufgabe der Erfindung besteht darin, einen Vorschlag zu unterbreiten, mit dem stabilere Flachrohre für Wärmetauscher zur Verfügung gestellt werden, die ebenfalls vorteilhafte thermodynamische Eigenschaften aufweisen.

Die erfindungsgemäße Lösung der Aufgabenstellung ergibt sich mit einem Herstellungsverfahren, welches die Merkmale des Anspruchs 1 aufweist.

Das Herstellungsverfahren wird auf einer Walzenstraße ausgeführt, die die Merkmale des Anspruchs 6 aufweist. Die Walzenstraße weist wenigstens einen Abschnitt zum Umformen des wenigstens einen endlosen Streifens, einen Abschnitt zum Vereinigen des Streifens zum Rohr und eine Abtrennstation für Rohre auf.

Gemäß einem wesentlichen Verfahrensaspekt ist vorgesehen, dass in Längsrichtung des Streifens laufende beabstandete Wellenberge und Wellentäler hergestellt werden.

Gemäß einem weiteren wesentlichen Aspekt ist vorgesehen, dass vor der Ausbildung der Wellenberge und Wellentäler zwischen denselben senkrecht oder schräg dazu sich erstreckende Turbulatoren eingebracht und/oder aus der Ebene des Streifens herausgestellt werden. Dies verbessert den Wärmeübergang zwischen einem im Inneren der Flachrohre strömenden Medium und einem außen um das Flachrohr strömenden Medium. Die Turbulatoren können bekannte Schnitte sein, die aus der Ebene des Streifens herausgedreht werden, oder sie können eine beliebige andere, den Zweck erfüllende Gestaltung besitzen. Unter der Bezeichnung "Turbulatoren" sollen jedoch auch Ausbildungen zu verstehen sein, die lediglich aus zwischen den Wellenbergen und Wellentälern liegenden Löchern im Streifen bestehen, ohne dass ein Materialstück aus der Ebene des Streifens herausgestellt ist.

Weiterhin ist vorgesehen, dass die Wellenberge und die Wellentäler mittels Walzenpaare, durch die der Streifen in seiner Längsrichtung hindurch läuft, ausgebildet werden. Die Wellenlaufrichtung ist quer zur Längsrichtung des Streifens.

Das Wandteil des Flachrohres und das mit Wellen ausgebildete Innenteil können Teile eines einzigen Streifens sein. Im Unterschied dazu besteht in einem bevorzugten Ausführungsbeispiel das Innenteil aus einem ersten Streifen und das Wandteil kann aus einem zweiten Streifen, oder aus dem zweiten und aus einem dritten Streifen hergestellt sein.

Ein Flachrohr, welches nach dem vorgeschlagenen Herstellungsverfahren auf der vorgeschlagenen Walzenstraße zur Verfügung gestellt werden kann, ist aus der bisher unveröffentlichten deutschen Patentanmeldung DE 10 2006 006 670.7 intern bekannt. Das intern bekannte Flachrohr eignet sich insbesondere dazu, die Blechdicken weiter zu reduzieren, bis in den Bereich von 0,03 - 0,15 mm hinein. Mit solchen Flachrohren ausgerüstete Wärmetauscher erfüllen die an sie zu stellenden Anforderungen insbesondere im Bereich Kraftfahrzeuge.

Beide Schmalseiten des Flachrohes sind verstärkt worden. Die Dicke der Streifen des Flachrohrs beträgt 0,25 mm oder weniger. Die drei Streifen können die gleiche Dicke aufweisen. Demgegenüber können die die Wand bildenden Streifen eine Dicke von weniger als 0,25 mm, beispielsweise 0,12 mm, aufweisen und die Dicke des dritten Streifens kann weniger als 0,10 mm betragen.

Die Dicke jedes der drei Streifen kann auch im Bereich von 0,03 mm - 0,15 mm liegen um einen kostengünstigen Wärmetauscher mit guten Wärmeübertragungseigenschaften bereitzustellen.

Das Innenteil ist mit in Querrichtung des Flachrohres laufenden Wellungen versehen, die in Längsrichtung des Flachrohres laufende Kanäle ausbilden. Solche geraden Wellungen sind äußerst kostengünstig und einfach zu realisieren. Die Wellungen sind so ausgebildet, dass die Wellenflanken etwa senkrecht auf den Breitseiten stehen oder lediglich einen kleinen Neigungswinkel aufweisen.

Der kleine Durchmesser **d** des Flachrohres liegt im Bereich von etwa 0,7 mm bis beispielsweise 1,5 mm, wenn solche Flachrohre in einem Kühlmittelkühler eingebaut sind. Bei Ladeluftkühlern kann der kleine Durchmesser d auch größer als 10,0 mm sein. Der große Durchmesser D kann in weiten Bereichen frei bestimmt werden, indem ein entsprechend breites Ausgangs-Bandmaterial zum Einsatz kommt. Die Rollenwalzen können zur Herstellung breiterer oder schmalerer Flachrohre einstellbar sein. Bevorzugt werden jedoch Rollensätze, die bevorzugte Rohrabmessungen repräsentieren, komplett ausgewechselt. Deshalb ermöglichen die nach dem Verfahren hergestellten Flachrohre auch die kostengünstige Herstellung von Wärmetauschern mit breiteren (tieferen) oder schmaleren Kühlnetzen unter Beibehaltung nur einer einzigen Rohrreihe.

Die Erfindung wird nun in verschiedenen Ausführungsbeispielen unter Bezugnahme auf die beigefügten Zeichnungen kurz beschrieben. Die Beschreibung der Ausführungsbeispiele kann weitere wesentliche Merkmale und Vorteile aufzeigen.

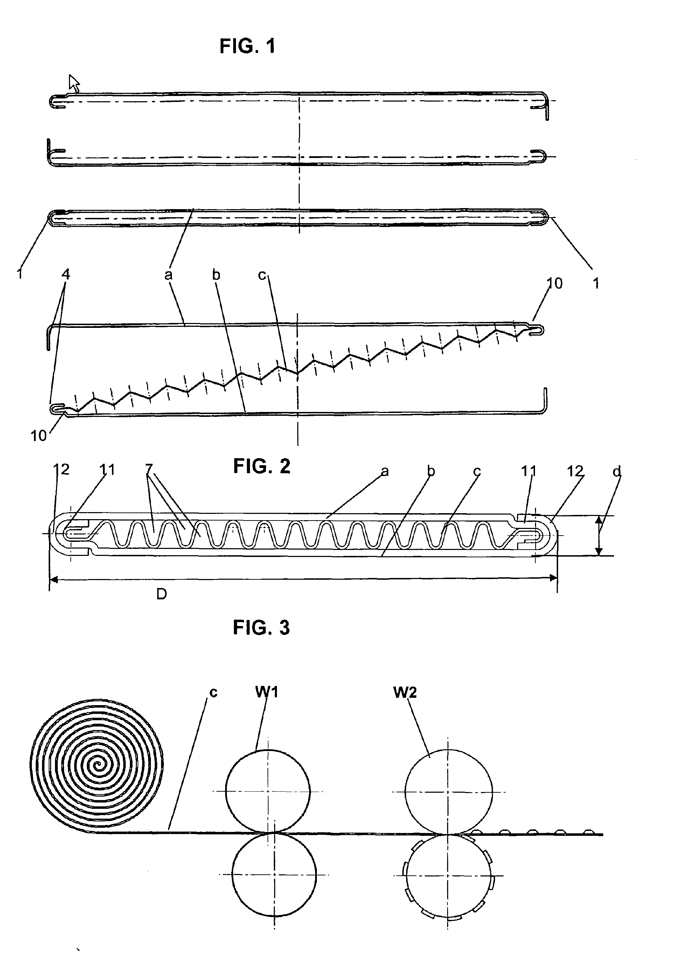

Die Fig. 1 zeigt ein bevorzugtes Flachrohr, in das ein Innenteil eingefügt wird.

Die Fig. 2 zeigt ein bevorzugtes fertig hergestelltes Flachrohr im Querschnitt.

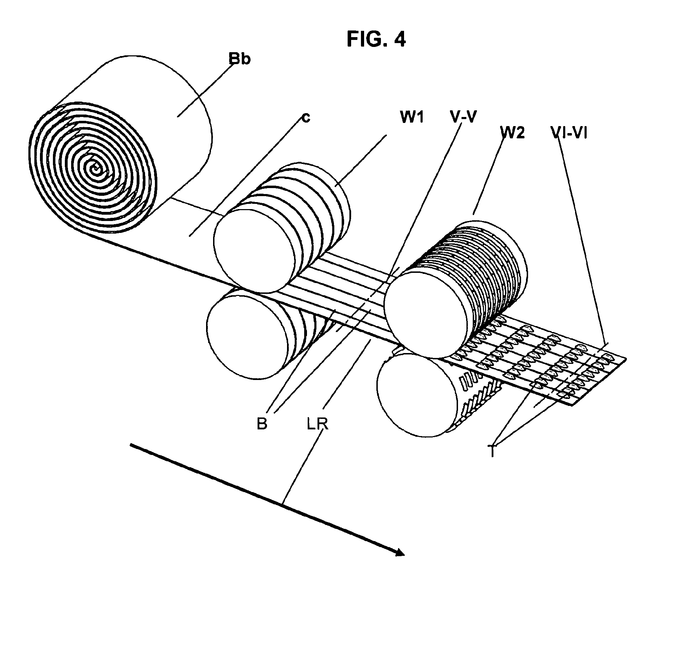

Die Fig. 3 und 4 zeigen einen vereinfachten Ausschnitt aus der Walzenstraße.

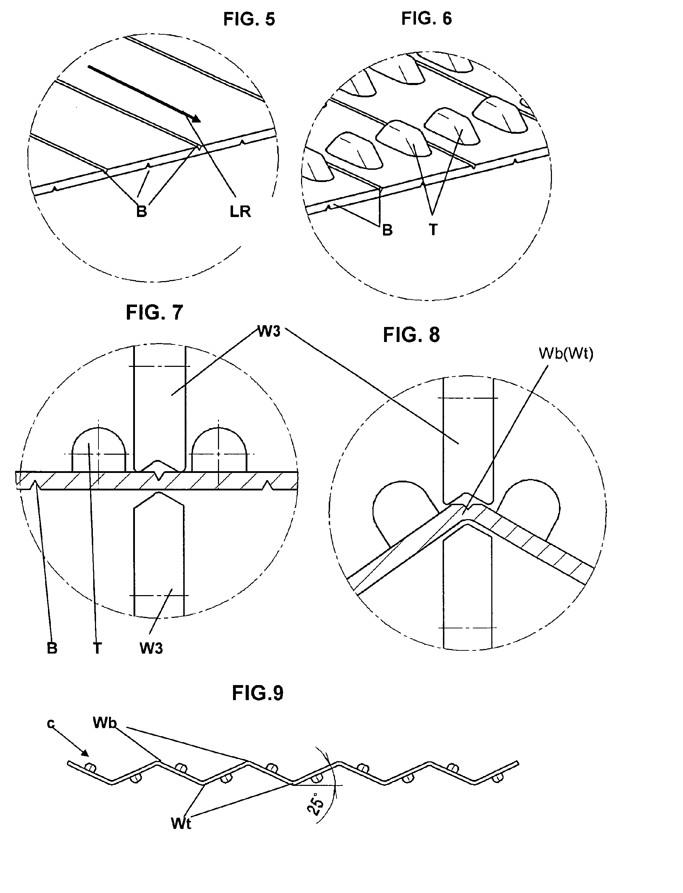

Die Fig. 6-9 zeigen im Zuge des Verfahrensablaufes vorliegende Umformstadien an dem einen Streifen, jeweils quer zu dessen Längsrichtung LR gesehen.

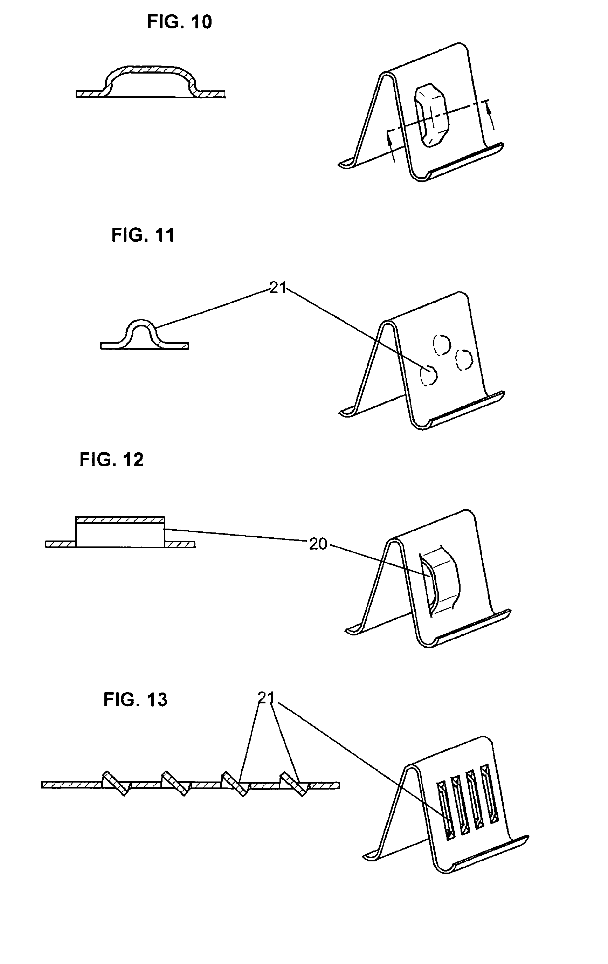

Die Fig. 10-16 zeigen einen gewellten Streifen mit unterschiedlichen Turbulatoren Die Fig. 17 und 18 zeigen Streifen mit unterschiedlichen Wellungen.

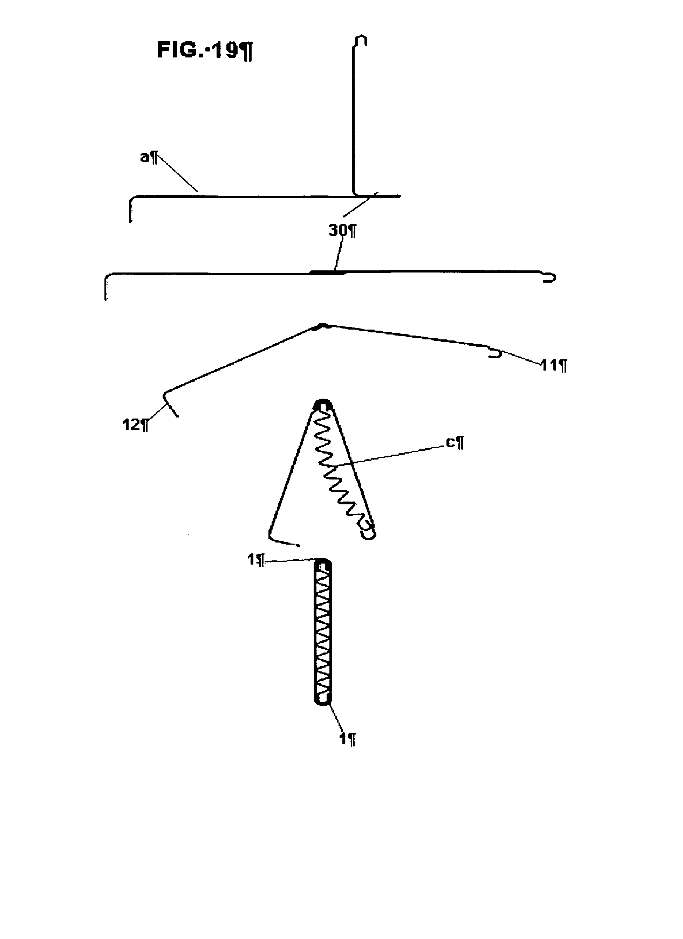

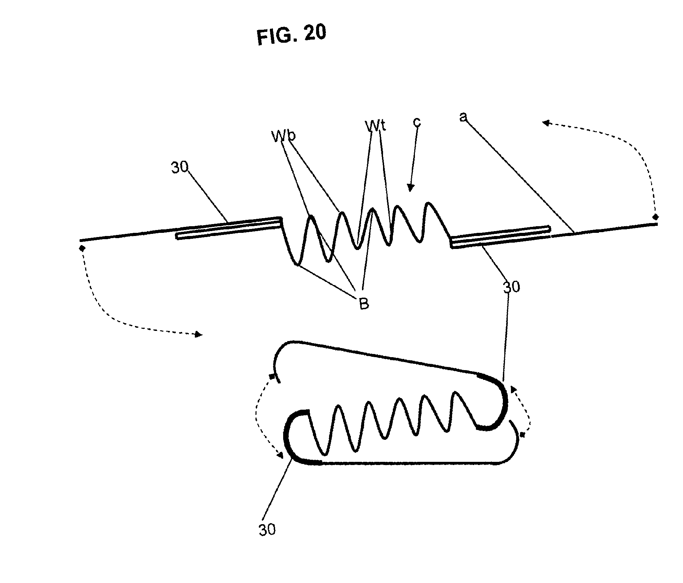

Die Fig. 19 zeigt einen Herstellungsablauf für ein anderes bevorzugtes Flachrohr. Die Fig. 20 zeigt einen Herstellungsablauf für ein weiteres Flachrohr.

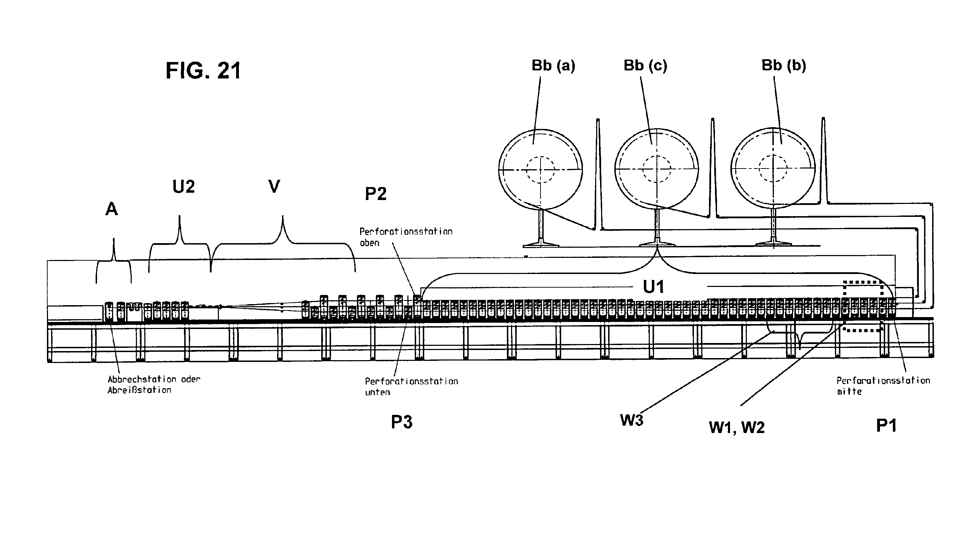

Die Fig. 21 zeigt eine Walzenstraße im Prinzip.

Die Fig. 22 zeigt den Stand der Technik aus einer gegenwärtig noch nicht veröffentlichten Patentanmeldung.

Die Streifen **a** und **b** des Flachrohres in der bevorzugten Ausführung gemäß den Fig. 1 und 2 sind identisch ausgebildet, jedoch mit seitenverkehrten Längsrändern **4** zueinander angeordnet worden. Das heißt, der eine Längsrand **4** der Streifen **a** und **b** ist mit einer Abstufung **10** versehen, an der sich ein in die spätere Schmalseite **1** laufender kleinerer Bogen **11** anschließt und der andere Längsrand ist lediglich mit einem die andere spätere Schmalseite **1** bildenden größeren Bogen **12,** (ohne Abstufung 10) versehen, der dazu geeignet ist, am späteren Flachrohr den kleineren Bogen **11** des jeweils anderen Streifens **a** bzw. **b** in sich aufzunehmen. In der ***Fig. 1*** wurde ein Streifen **a** oder **b** in einem Zustand gezeichnet, bei dem der große Bogen **12** noch nicht fertig hergestellt ist. Der Begriff "Bogen" soll nicht bedeuten, dass es sich dabei um nichts anderes als um ein Halbrund handeln kann. Vielmehr bedeutet der Begriff "Bogen" eine geeignete Geometrie, die den Zweck erfüllen kann.

Die die Wellenberge **Wb** und die Wellentäler **Wt** verbindenden Wellenflanken sind lediglich geringfügig geneigt angeordnet. Beide Längsränder des Innenteiles c sind gemäß Fig. 2 so verformt, dass sie innen an den Schmalseiten **1** des Flachrohres anliegen und somit beide Schmalseiten **1** verstärken. Die Dicke jeder Schmalseite **1** entspricht im Ausführungsbeispiel gemäß Fig. 2 somit der Summe der Dicke der drei Streifen **a, b, c.** Die drei Streifen **a, b, c** können die gleiche Dicke aufweisen. Das Dickenmaß jedes der drei Streifen **a, b, c** kann im Bereich von 0,03 mm - 0,15 mm liegen. Bevorzugt weisen die die Wand bildenden Streifen **a, b** ein Dickenmaß etwa zwischen 0, 10 mm - 0,25 mm auf und das Dickenmaß des dritten Streifens c beträgt etwa zwischen 0,03 - 0, 10 mm. Trotz dieser geringen Blechdicken weisen beide Schmalseiten **1** des Flachrohres eine relativ gute Stabilität auf.

Die Wellungen des Innenteiles c laufen in Querrichtung des Flachrohres und bilden in Längsrichtung des Flachrohres laufende Kanäle **7** aus. Die Kanäle **7** sind als diskrete oder als offene Strömungskanäle **7** ausgebildet. Der hydraulische Durchmesser der Kanäle **7** kann durch entsprechende Ausbildung der Wellungen bestimmt werden. Er ist relativ klein, wenn man bedenkt, dass der kleine Durchmesser **d** der Flachrohre etwa 0,8 mm betragen kann und die Anzahl der Wellungen relativ groß ist. Wenigstens einige der Streifen **a, b, c** besitzen eine zweckmäßige Lotbeschichtung, denn es ist vorgesehen, die Streifen **a, b, c** des Flachrohrs und auch das gesamte Kühlnetz des Wärmetauschers mittels eines Lötverfahrens zu verbinden. (nicht gezeigt) Die Streifen **a, b, c** des Flachrohres bestehen im Ausführungsbeispiel aus Aluminiumblech, welches als endloses Bandmaterial zur Verfügung gestellt wird. Weitere Einzelheiten gehen aus der genannten älteren Anmeldung mit der Anmeldenummer DE 10 2006 006 670.7, deren gesamter Inhalt zur Vermeidung weiterer Erklärungen an dieser Stelle als vollständig gezeigt und beschrieben gelten soll.

Wie das Ausführungsbeispiel in der Fig. 21 zeigt, und wie bereits erwähnt wurde, werden drei Blechbänder **Bb** (coils) bzw. drei Streifen **a, b, c** eingesetzt. Ein Blechband **Bb** dient der Herstellung des einen Wandteils **a,** ein anderes Blechband dient der Herstellung des zweiten Wandteiles **b,** und das dritte, das breiteste Blechband **Bb** (Fig. 21 in der Mitte) dient der Herstellung des Innenteiles **c.** Die abspulenden Blechbänder **Bb** laufen zunächst über Rolleneinrichtungen, die eine bestimmte Pufferung von Bandmaterial gestatten. Zu erkennen sind in der Fig. 21 dazu dienende Bandschlaufen. Die Herstellung des Flachrohres beginnt mit der Herstellung bzw. mit der Umformung des Innenteiles **c.** Die Fig. 6 zeigt den Streifen **c** an der Linie VI-VI in der Fig. 4, nach Verlassen des nächsten Walzenpaares **W2,** mit dem Turbulatoren **T** eingearbeitet worden sind.

In den Fig. 10 - 16 werden verschiedene Turbulatoren **T** gezeigt. Es kann sich dabei um Auswölbungen **21** handeln oder auch um Schnitte **20,** die aus der Ebene des Streifens **c** herausgestellt werden. Die Turbulatoren T werden in das noch ebene Band eingebracht, womit zum Ausdruck gebracht werden soll, dass sich die Ausbildung der Wellen daran anschließt.

Zurückkommend auf die Fig. 21, aus der weiterhin erkennbar ist, dass das Walzenpaar **W2** Teil eines ersten Umformabschnittes **U1** der Walzenstraße sind. Wenn der Streifen c das Walzenpaar **W2** verlassen hat, beginnt die Ausbildung der Wellenberge **Wb** und Wellentäler **Wt,** was mit Hilfe weiterer Walzenpaare **W3** erfolgt, die auch in den Fig. 7 und 8 angedeutet wurden. Die Fig. 9 zeigt das Innenteil **c** in einem etwa halb fertigen Zustand, der allerdings auch ein Endzustand sein kann, je nachdem welche konkrete Wellengeometrie für einen gewünschten Einsatzfall vorgesehen wird. Dort sind bereits Wellenberge **Wb** und Wellentäler **Wt** ausgebildet worden.

In dem bereits erwähnten ersten Umformabschnitt **U1** der Walzenstraße beginnt auch die Umformung der Ränder **4** der Wandteile des Flachrohres bzw. der Streifen **a** und **b,** was in der Fig. 21 nicht näher gezeigt wird, was aber mit Blick auf die dritte Darstellung von oben in der Fig. 1 verständlich ist. Dort ist eine Situation zu sehen, wie sie etwa vorliegt, wenn sich die Streifen **a, b** und **c** im Vereinigungsabschnitt **V** befinden, also wenn sie den ersten Umformabschnitt **U1** bereits verlassen haben, der in der Fig. 21 durch das genannte Bezugszeichen **V** angegeben wurde. Sind die Streifen **a, b, c** miteinander vereinigt worden, wird in einem zweiten Umformabschnitt **U2** (Fig. 21) das Flachrohr geschlossen, so dass schließlich eine Rohrgeometrie vorliegt, wie sie in der Fig. 2 beispielsweise gezeigt wird. Im Anschluss daran erfolgt das Ablängen (Zuschnitt auf gewünschte Länge) einzelner Flachrohre, wozu die Walzenstraße die Abtrennstation **A** aufweist. Das Abtrennen wird vereinfacht bzw. qualitativ verbessert, wenn die Streifen **a, b, c** vorher an den entsprechenden Stellen perforiert oder mit Sollbruchstellen versehen werden, wozu die Walzenstraße mit Perforationsstationen **P1, P2,** und **P3** ausgerüstet wurde. In dem erwähnten Vereinigungsabschnitt V wird dafür gesorgt, dass sich die Sollbruchstellen in den einzelnen Streifen **a, b, c** beim fertig umgeformten Rohr exakt auf einer gemeinsamen Höhe befinden. Die Sollbruchstellen können ebenfalls Bandverdünnungslinien sein, die jedoch, im Unterschied zu den beschriebenen Bandverdünnungslinien **B,** quer zur Längsrichtung **LR** angeordnet sind. (nicht gezeigt)

Die zugeschnittenen Flachrohre werden mit Wellrippen zum Kühlnetz des Wärmetauschers zusammengelegt. Das Kühlnetz oder der gesamte Wärmetauscher wird in einem Lötofen gelötet. Dabei verlöten die Wellrippen mit den Flachrohren und die Flachrohre mit ihren Inneneinsätzen. (nicht gezeigt) Es wurde festgestellt, dass sich die Bandverdünnungslinien **B** auch günstig auf die angesprochene Lötung auswirken. Die Fig. 17 zeigt ein gewelltes Innenteil mit gerundeten Wellenbergen **Wb** und Wellentälern **Wt,** wogegen die Fig. 18 ein Innenteil c zeigt, dessen Wellenberge und Wellentäler im Wesentlichen flach ausgebildet sind. Beide Gestaltungen können gemäß dem Herstellungsverfahren mittels einer Walzenstraße zur Verfügung gestellt werden.

Die Fig. 19 zeigt die Herstellung eines Flachrohres, bei dem lediglich ein einziger Streifen **a** zur Ausbildung der Wand des Flachrohres vorgesehen ist. Dieser Streifen **a** wird im Vergleich zum bereits beschriebenen Ausführungsbeispiel stärker umgeformt. Es wird hier eine Faltung **30,** in Längsrichtung des Streifens **a** laufend, ausgebildet und danach wird eine in der Faltung **30** liegende Biegung erzeugt, die die eine Schmalseite **1** des Flachrohres bildet. Ein zweiter Streifen **c** bildet bei diesem Flachrohr das Innenteil aus, der so hergestellt wird, wie vorstehend beschrieben wurde. In der Fig. 19 zeigen die oberen drei Darstellungen Zwischenstadien der Umformung des Streifens **a.** Die vierte Darstellung zeigt das Vereinigen der beiden umgeformten Streifen **a** und **c** und die untere Darstellung zeigt das fertige Flachrohr. Auch dieses Flachrohr besitzt zwei verstärkte Schmalseiten 1. Es kann deshalb mit sehr geringer Wanddicke ausgebildet werden.

Die zwei verstärkten Schmalseiten treffen auch für das in der Fig. 20 gezeigte Ausführungsbeispiel zu, welches ein Flachrohr skizzenhaft in Zwischenstadien zeigt, das aus einem einzigen Streifen hergestellt wird. Zwei Abschnitte des Streifens werden zu einem Wandteil **a** umgeformt, und ein anderer Abschnitt des Streifens stellt einen mit Wellen ausgebildeten Innenteil **c** dar. Die Wellen haben alle die gleiche Wellenhöhe, auch wenn die Skizzen einen anderen Eindruck vermitteln, denn die Wandteile **a** sollen auch bei diesem Flachrohr parallel zueinander angeordnet sein. Auf der Walzenstraße wird mit der Herstellung des gewellten Innenteils **c** aus dem erwähnten einen anderen Abschnitt begonnen, woran sich die Herstellung der Wellen anschließt. Daran schließt sich wiederum die Ausbildung von Faltungen **30** an, die zum Wandteil **a** gehören. Der jetzt erreichte Zustand kann in der oberen Darstellung der Fig. 20 gesehen werden. Danach erfolgt das endgültige Schließen des Rohres an, was durch die gestrichelten Pfeile kenntlich gemacht sein soll.

## Patentansprüche

1. Herstellungsverfahren für Flachrohre, aus wenigstens einem Streifen endlosen Bandmaterials (Bb) mit wenigstens einem Wandteil (a) und einem mit Wellen ausgebildeten Innenteil (c), auf einer mit Walzenpaaren ausgerüsteten Walzenstraße, wobei der Streifen in Längsrichtung (LR) durch die Walzen läuft und umgeformt wird, wobei das mit Wellen ausgebildete Innenteil (c) zwischen das umgeformte Wandteil (a, b) gebracht wird, wonach das Schließen des Flachrohrs durchgeführt wird, **dadurch gekennzeichnet, dass** zunächst in das noch ebene Bandmaterial (Bb) bzw. in den noch ebenen Streifen Turbulatoren (T) eingebracht und / oder aus der Ebene des Streifens (c) herausgestellt werden, dass danach in Längsrichtung (LR) des Streifens (c) laufende, mit Abstand angeordnete Wellenberge (Wb) und Wellentäler (Wt) hergestellt werden und dass das Flachrohr mit zwei verstärkten Schmalseiten ausgebildet wird.

2. Herstellungsverfahren nach Anspruch 1, **dadurch gekennzeichnet, dass** das Innenteil (c) und das Wandteil (a) Teile eines einzigen Streifens sind.

3. Herstellungsverfahren nach Anspruch 1, **dadurch gekennzeichnet, dass** das Innenteil (c) aus einem ersten Streifen und das Wandteil (a) aus einem zweiten Streifen gebildet werden.

4. Herstellungsverfahren nach Anspruch 1, **dadurch gekennzeichnet, dass** das Innenteil (c) aus einem ersten Streifen gebildet wird und dass das Wandteil (a) aus einem zweiten und aus einem dritten Streifen (b) gebildet wird.

5. Herstellungsverfahren nach einem der vorstehenden Ansprüche, **dadurch gekennzeichnet, dass** die Wellenberge (Wb) und die Wellentäler (Wt) mittels Walzenpaare durch die der Streifen in seiner Längsrichtung hindurch läuft ausgebildet werden

6. Walzenstraße zur Durchführung des Verfahrens zur Herstellung von Rohren (1) aus wenigstens einem endlosen Streifen Bandmaterials, gemäß wenigstens einem der vorstehenden Verfahrensansprüche, wobei die Walzenstraße wenigstens einen Abschnitt (U) zum Umformen des Streifens, einen Abschnitt (V) zum Vereinigen des Streifens zum Rohr (1) und eine Abtrennstation (A) für Rohre (1) aufweist, **dadurch gekennzeichnet, dass** die Walzenstraße wenigstens ein Walzenpaar (W2) zur Ausbildung von Turbulatoren (T) oder von Löchern in dem Streifen (c) aufweist und wenigstens ein weiteres Walzenpaar aufweist, mit dem in Längsrichtung des Streifens laufende Wellenberge und Wellentäler herstellbar sind.

7. Walzenstraße nach Anspruch 6, **dadurch gekennzeichnet, dass** die Walzenstraße eine Perforationsstation (P) zum Perforieren der Streifen und einen Abschnitt (Ü) zum In - Übereinstimmung - Bringen der Perforationen (3) in den perforierten Teilen (a, b) aufweist.

8. Walzenstraße nach Anspruch 7 , **dadurch gekennzeichnet, dass** die Anzahl von Perforationsstationen (P) vorzugsweise der Anzahl der Streifen entspricht.

9. Wärmetauscher, insbesondere für Kraftfahrzeuge, mit einem Kühlnetz aus Flachrohren und Wellrippen, **dadurch gekennzeichnet, dass** die Flachrohre nach wenigstens einem der vorstehenden Ansprüche ausgebildet bzw. herstellbar sind.
